# EUROPEAN PATENT SPECIFICATION

(11) **EP 3 031 195 B1**
(45) Date of publication and mention of the grant of the patent: **02.03.2022**
(21) Application number: 13750999.8
(22) Date of filing: 05.08.2013
(51) Int. Cl.: H04L 29/08, H04L 29/06, H04W 4/08, H04W 4/50, H04W 4/60, H04W 12/02, H04W 12/04, H04W 12/06, H04W 12/30

(54) **SECURE STORAGE SYNCHRONIZATION**
SYNCHRONISIERUNG MIT SICHERER SPEICHERUNG
SYNCHRONISATION DE STOCKAGE SÉCURISÉ

(43) Date of publication of application: 15.06.2016
(73) Proprietor: Nokia Technologies Oy, 02610 Espoo (FI)
(72) Inventor: HOLTMANNS, Silke, FIN-01800 Klaukkala (FI); LINDHOLM, Rune, FIN-02150 Espoo (FI)
(74) Representative: Swindell & Pearson Limited
(86) International application number: PCT/US2013/053661
(87) International publication number: WO 2015/020629

(56) References cited:
- US-A1- 2009 088 133
- US-A1- 2010 093 310
- US-A1- 2011 010 340

## Description

### Field

The subject matter described herein relates to wireless communications.

### Background

US2009/088133 (D1) discloses a method and system for distributing data within a group of mobile units. According to D1, a method is described for writing data onto a storage device from a wireless access point ("AP"), providing the data to a master mobile unit ("MMU"), authenticating an identity of the MMU at the AP and transmitting the data from the MMU to at least one other mobile unit ("MU"). Also described in D1 is a device having a connector coupling a storage device to the device, the storage device including data received from a network device and a transceiver communicating with the network device to authenticate the device, wherein when the device is authenticated, the transceiver further transmits the data to at least a first mobile unit ("MU").

A Universal Integrated Circuit Card (UICC) refers to a computer-readable storage medium, which may have a card-like form. The UICC is often referred to as a smart card, which may include a processor, a memory including computer program code, input/output, and the like. The UICC may be used to provide secure storage to a device, such as a tablet, smartphone, computer, and/or any other device. For example, the UICC may provide secure storage of, among other things, user identity information, which can be used to authenticate a user or a device accessing a network or device, such as a public land mobile network, a server, a machine-to-machine communications network, and/or the like. The acronym "eUICC" may refer to an embedded UICC. The term embedded is generally used to indicate that the UICC, or in more general terms, secure element, supports a remote management functionality, this embedded secure element may not be removed from the
device by the user, although the eUICC may often refer to a removable secure element as well. The form factor of an eUICC may be a System on Chip (SoC), a trusted platform chip, or a removable secure element. The eUICC is included in a device, which is able to communicate with other devices in a group and may also be able to communicate outside of this group.

### Summary

The invention is defined by the independent claims. Further embodiments are defined by the dependent claims.

Methods and apparatus, including computer program products, are provided for secure storage synchronization. In examples there is provided a method. The method may include receiving, at a user equipment, an update to an application stored in a secure memory device at the user equipment; sending a notification to announce the update being available at the secure memory device at the user equipment, wherein the notification is sent securely to at least one device, when the at least one device connects to a group network including the at least one device and the user equipment; and providing, by the user equipment, the update securely to the at least one device, when the at least one device connects to the group network.

In some examples, one or more of the features disclosed herein including following features can optionally be included in any feasible combination. The notification may be bound to the at least one device. The notification may include at least one of an identifier of the at least one device and a value to bind the notification to the at least one device. The notification may include an identifier of the user equipment, an application identifier, and a version identifier for the application. The at least one device may provide the notification to the user equipment to obtain the provided update. The notification may be sent securely by the secure memory device by at least one of authenticating the at least one device and encrypting the notification. The update may be provided securely by the secure memory device by at least one of authenticating the at least one device and encrypting the notification. The at least one other device may include another secure memory device to perform the authenticating and the encrypting with the secure memory device at the user equipment. The secure memory device at the user equipment may include at least one of a secure element, a universal integrated circuit card, an enhanced universal integrated circuit card, an embedded universal integrated circuit card, a smartcard, a secure memory card, a trusted execution environment, and a subscriber identity module.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### Description of the Drawings

In the drawings,
FIG. 1 depicts an example of a system including a group of devices being synchronized, in accordance with some exemplary embodiments;
FIG. 2 depicts an example of a process for synchronizing a group of devices, in accordance with some exemplary embodiments;
FIGs. 3-4 depict the system of FIG. 1 after synchronization, in accordance with some exemplary embodiments;
FIG. 5 depicts an example network over which the system of FIG. 1 may be implemented, in accordance with some exemplary embodiments; and
FIG. 6 depicts an example of a user equipment, in accordance with some exemplary embodiments.

Like labels are used to refer to same or similar items in the drawings.

### Detailed Description

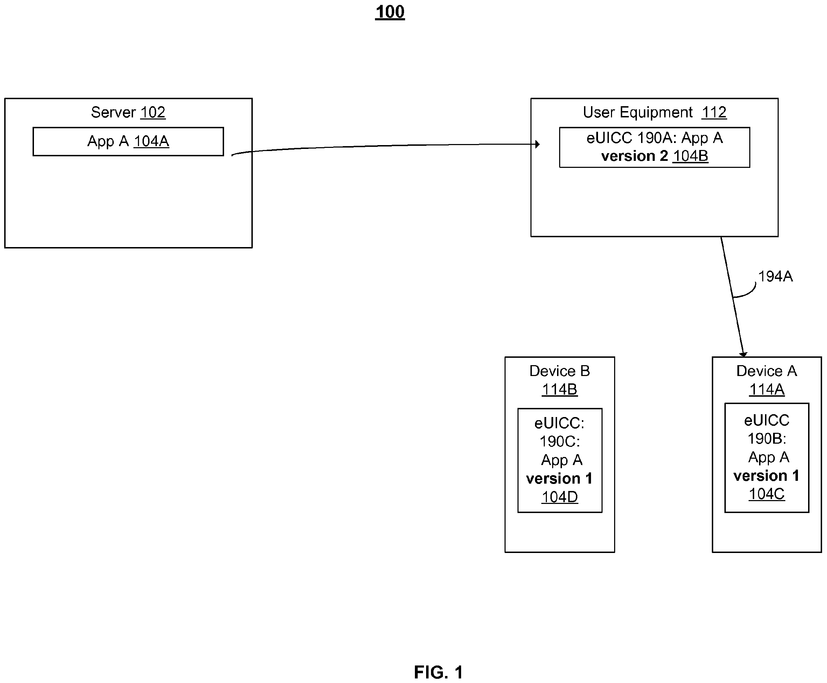

FIG. 1 depicts an example system 100 including a server 102, a user equipment 112, and one or more devices 114A-B, in accordance with some example embodiments.

The user equipment 112 may couple, via a wireless and/or wired network, to server 102 to obtain data, such as an application 104A and/or other information. For example, user equipment 112 may couple to server 102 to download an application, and this download may be performed securely. The secure download may be secure in the sense that user equipment 112 may utilize transport security to secure the messages (for example, via an encryption key or other mechanism) exchanged between the server 102 and the user equipment 112, and/or may utilize eUICC 190A to perform authentication, encryption, and/or provide other security mechanisms in order to access server 102 (or access a group network) to download data (for example, updates to application A 104B).

Once downloaded, application 104B may be under the control of the user at user equipment 112. For example, application 104B may allow a user to provide content and other information. To illustrate further, application 104B may be configured as a password safe application configured to store passwords securely at user equipment 112. In this example, passwords may be added to the password safe application, and these passwords may be stored in a secure storage device, such as eUICC 190A. Although the previous example described application 104B as a password safe application, any other application, data, and/or information may be used at application 104B. Examples of these applications include one-time passwords used for secure payment transactions, cryptographic certificates, cryptographic keys (which may have a lifetime), sensitive documents stored and edited on more than one device and any other data, application, electronic document, and the like that should be handled securely, may be changed, and where those changes may need to be synchronized with other devices. An eUICC may thus provide secure storage for applications and contain confidential information which may change over time and therefore needs to be synchronized with eUICCs located on other devices

In some example embodiments, user equipment 112 and devices 114A-B may be configured as a so-called "group" of devices. For example, user equipment 112 and devices 114A-B may couple to a common home wireless network, such as a WiFi network, an ad-hoc network, near field communications links, device-to-device links, and/or the like, to access a group network. The common home wireless network may require members of the group network, such as user equipment 112 and devices 114A-B, to authenticate using a password or a group key (both of which may securely stored in a eUICC) before being granted access to the group network. Moreover, the devices of the group network may also secure transmissions (for example, via transport security, such as link or message encryption) using the group key or other key known to, or derivable by, the members of the group.

In the example embodiment of FIG. 1, user equipment 112 may include application 104B downloaded from server 102, and this application 104B may include information not present in other home devices, such as devices 114A-B. The subject matter disclosed herein may, in some example embodiments, provide ways to synchronize the applications and/or information associated with the application among devices of a group network including, for example user equipment 112, devices 114A-B, and/or the like. Returning to the password safe application example noted above, user equipment 112 may add a password for secure storage by password safe application (which may correspond to application 104B at eUICC 190A). However, these additional passwords may not be stored at password safe applications 104C and 104D at for example device 114A including eUICC 190B and device 114B including eUICC 190C. Consequently, synchronization may be performed so that the additional passwords are provided to device 114A/eUICC 190B and device 114B/ eUICC 190C.

Although some of the examples described herein refer to eUICC 190A-C, other secure storage devices may be used as well including a smartcard, a secure memory device, a UICC, a subscriber identity module (SIM), and/or any other secure storage device.

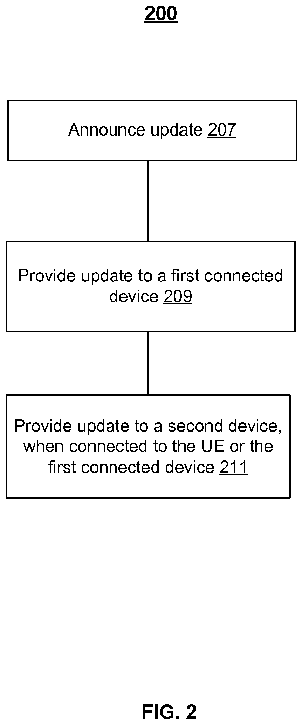

FIG. 2 depicts an example process 200 for synchronizing devices in a group, in accordance with some example embodiments.

At 207, an update announcement may be sent, in some example embodiments. For example, when user equipment 112 has an update that should be shared with other devices within the group, user equipment 112 may announce an update to devices, which are members of the group. In the example of FIG. 1, application 104B at eUICC 190A may include information not available (or present) at the other applications 104C-D of the group.

According to the password safe example, if new information, such as a new password, is added to application 104B (shown as version 2 due to the updated information), the other devices 114A-B in the group may require updating (shown as version 1 due to the lack of the new passwords at those devices). According to this example, at 207 user equipment 112 announces an update to devices 114A-B to indicate that a new version of the application 104B is available from user equipment 112.

According to a one-time password list example, if a one-time password is used at application 104B, the one-time password is removed from the list (shown as version 2 due to the updated information), the applications 104C-D at the other devices 114A-B in the group may require updating (shown as version 1 due to stale information at those devices). According to this example, at 207 user equipment 112 announces an update to devices 114A-B to indicate that a new version of application 104B is available from user equipment 112.

When an update should be performed to synchronize the applications including information contained therein, user equipment 112 including eUICC 190A may send a notification to the other devices in the group. The notification may be sent to one or more devices connected to the group network, and the notification may include one or more of the following: an identify of a source device (for example, user equipment 112 having the update); an application identifier (for example, the identity of application 104B having the update); a version identifier (for example, a time stamp when application 104B was last updated, a version number, and the like); and an identity of the receiving device(s) authorized to receive the update (for example, an identifier, such as a media access control address, international mobile subscriber identifier, and/or any other generally unique identifier).

In some example embodiments, the notification may include a ticket, which when received by a device, such a device 114B, authorizes the device to receive the update. For example, user equipment 112 may send tickets to each of devices 114A-B, and the tickets may be bound specifically to the identity of each of the devices authorized to receive the update. When this is the case, only device 114A can redeem its received ticket in order to obtain the update available at eUICC 190A, and only device 114B can redeem its received ticket in order to obtain the update. This ticket-based approach may thus be used to control the devices authorized to receive updates.

In some example embodiments, the notification is securely sent to a device by for example requiring authentication (for example, via a password or a group key), transport security (for example, message or link encryption), and/or any other security mechanism. For example, group members, such as user equipment 112/eUICC 190A and device 114A/eUICC 190B, may perform an authentication before exchanging messages (including the notification) and/or encrypt the messages (including the notification) exchanged via link 194A.

In some example embodiments, user equipment 112 may track devices authorized to receive updates and/or whether updates have been sent to certain devices.

In the example of FIG. 1, user equipment 112 may announce the update to device 114C, which is already connected to the group network at 194A, by sending the notification via link 194A, and this notification may be sent securely. For example, the notification may be securely sent using a key specific to device 114C authorized to receive the update. In the example of FIG. 1, device 114B is not connected to the group network, so device 114B does not receive the update announcement.

At 209, the update may be provided to one or more devices of the group, in accordance with some example embodiments. Referring to FIG. 1, user equipment 112 may provide updates of application A to devices 114A-B, so that applications 104A-C are synchronized with respect to for example content information and/or any other aspect. In some example embodiments, the update may be performed securely over the network. For example, the update may be provided after devices 114A-B authenticate and/or the update may be performed using transport security (for example, message encryption based on a group key or any other type of key).

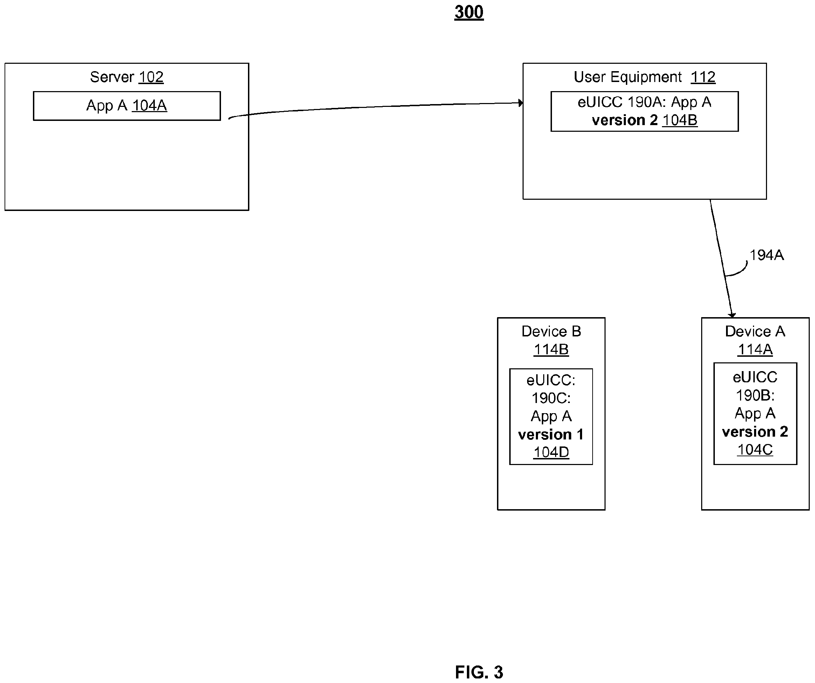

FIG. 3 depicts system 100 after an update to device 114A as shown by version 2 at applications 104C.

Referring to FIGs. 2 and 3, device 114B may, at 211, be updated, when device 114B connects to the group network, in accordance with some example embodiments. When device 114B connects to user equipment 112 and/or connects to device 114A, device 114B may obtain the notification announced at 207 and/or the update to application 104D. In some example embodiments, the update may be performed securely over the group network, as noted with respect to 209. For example, when the device 114B couples to either user equipment 112 and/or device 114A, device 114B may request to receive (or be pushed with) the status of updates, notifications, tickets, updates, and the like. For example, the notification, or ticket, indicating an update to application 104D may be received by device 114B when it connects to the group network.

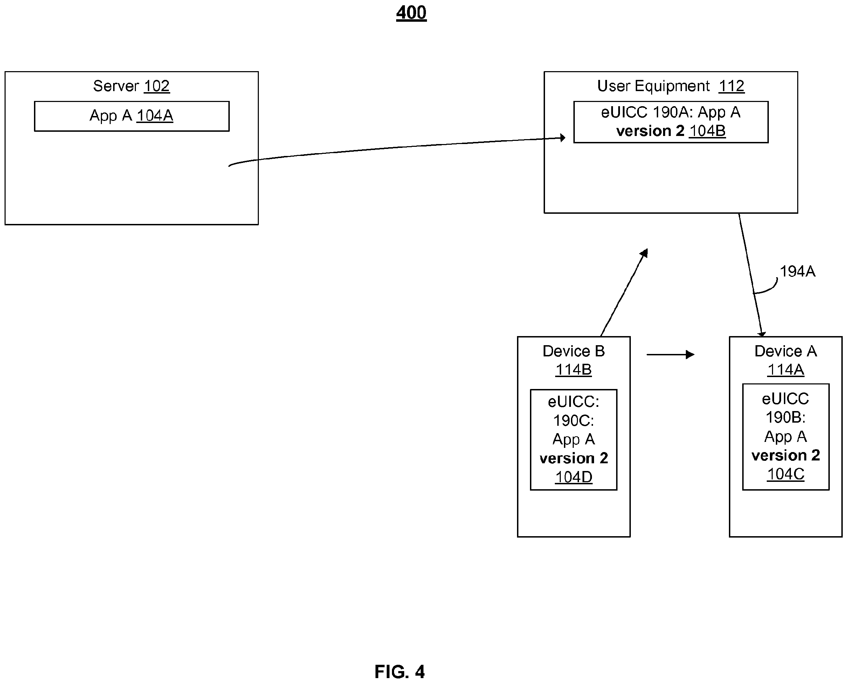

In some example embodiments, device 114B obtains the update to application 104D directly from device 114A, while in some other embodiments, device 114B obtains the update to application 104D directly from user equipment 112. In this case, the device 114B may need to obtain a notification that informs the device that the update is available at user equipment 112. FIG. 4 depicts device 114B after the update to application 104D directly from user equipment 112 (or from device 114A/eUICC 190B).

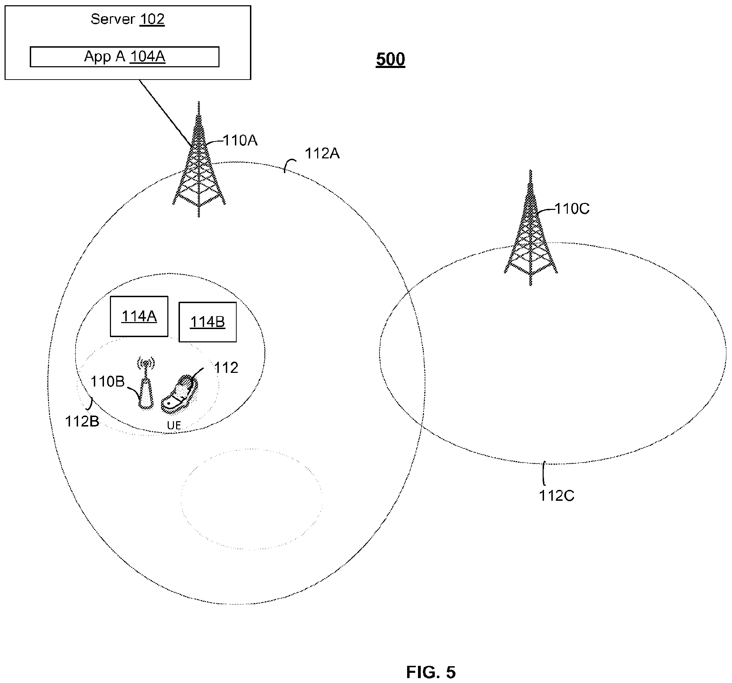

FIG. 5 depicts an example system 500 including base stations 110A and 110C, which may be configured as evolved Node B (eNB) base stations serving macrocells 112A and 112C (also referred to herein as cells and coverage areas). System further includes a wireless access point 110B, which may be configured to serve a wireless local area network or a small cell 112B. System 500 further includes user equipment 112 and devices 114A-B, which may be served by base station 110A and/or wireless access point 110B. Further, server 102 may be coupled to via backhaul links, the Internet, and/or other networks to base station 110A.

In some example embodiments, the user equipment, such as for example user equipment 112, may be implemented as a mobile device and/or a stationary device. The user equipment may be referred to as, for example, mobile stations, mobile units, subscriber stations, wireless terminals, tablets, smart phones, wireless devices, or the like. A user equipment may be implemented as, for example, a wireless handheld device, a wireless plug-in accessory, or the like. In some example embodiments, user equipment may be configured as a multimode radio accessing cellular access networks via base station 110A and non-cellular access networks via access points 110B and/or other devices. In some example embodiments, devices 114A-B may be configured as user equipment and/or configured to provide machine-to-machine communications.

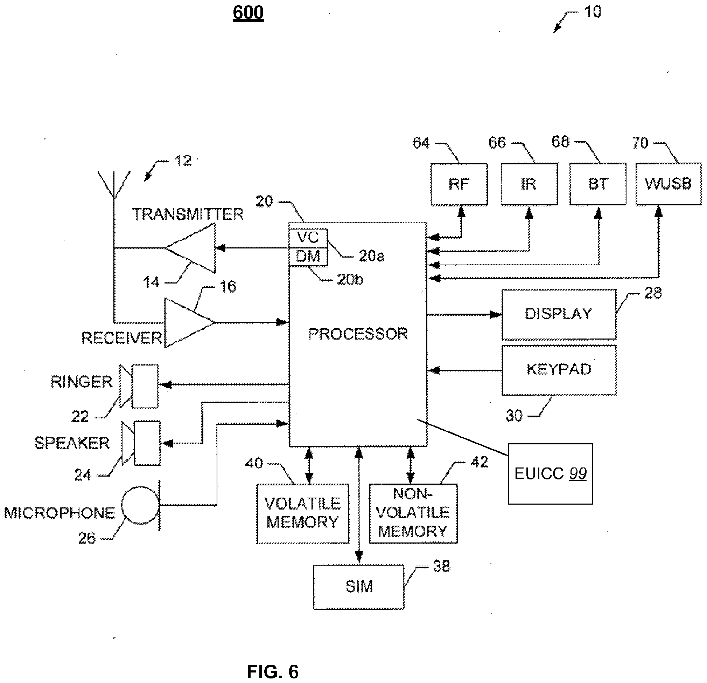

FIG. 6 illustrates a block diagram of an apparatus 10, which can be configured as user equipment in accordance with some example embodiments.

The apparatus 10 may include at least one antenna 12 in communication with a transmitter 14 and a receiver 16. Alternatively transmit and receive antennas may be separate.

The apparatus 10 may also include a processor 20 configured to provide signals to and receive signals from the transmitter and receiver, respectively, and to control the functioning of the apparatus. Processor 20 may be configured to control the functioning of the transmitter and receiver by effecting control signaling via electrical leads to the transmitter and receiver. Likewise processor 20 may be configured to control other elements of apparatus 10 by effecting control signaling via electrical leads connecting processor 20 to the other elements, such as for example for example, a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 6 as a single processor, in some example embodiments the processor 20 may comprise a plurality of processors or processing cores.

Signals sent and received by the processor 20 may include signaling information in accordance with an air interface standard of an applicable cellular system, and/or any number of different wireline or wireless networking techniques, comprising but not limited to Wi-Fi, wireless local access network (WLAN) techniques, such as for example, Institute of Electrical and Electronics Engineers (IEEE) 802.11, 802.16, and/or the like. In addition, these signals may include speech data, user generated data, user requested data, and/or the like.

The apparatus 10 may be capable of operating with one or more air interface standards, communication protocols, modulation types, access types, and/or the like. For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols (LTE), Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as for example, Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as for example, Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as for example, LTE Advanced and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as for example, a web browser. The connectivity program may allow the apparatus 10 to transmit and receive web content, such as for example, location-based content, according to a protocol, such as for example, wireless application protocol, WAP, hypertext transfer protocol, HTTP, and/or the like.

Apparatus 10 may also comprise a user interface including, for example, an earphone or speaker 24, a ringer 22, a microphone 26, a display 28, a user input interface, and/or the like, which may be operationally coupled to the processor 20. The display 28 may, as noted above, include a touch sensitive display, where a user may touch and/or gesture to make selections, enter values, and/or the like. The processor 20 may also include user interface circuitry configured to control at least some functions of one or more elements of the user interface, such as for example, the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as for example, a keypad 30 (which can be a virtual keyboard presented on display 28 or an externally coupled keyboard) and/or other input devices.

As shown in FIG. 4, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as for example, an infrared (IR) transceiver 66, a Bluetooth (BT) transceiver 68 operating using Bluetooth wireless technology, a wireless universal serial bus (USB) transceiver 70, and/or the like. The Bluetooth transceiver 68 may be capable of operating according to low power or ultra-low power Bluetooth technology, for example, Wibree, radio standards. In this regard, the apparatus 10 and, in particular, the short-range transceiver may be capable of transmitting data to and/or receiving data from electronic devices within a proximity of the apparatus, such as for example, within 10 meters, for example. The apparatus 10 including the WiFi or wireless local area networking modem may also be capable of transmitting and/or receiving data from electronic devices according to various wireless networking techniques, including 6LoWpan, Wi-Fi, Wi-Fi low power, WLAN techniques such as for example, IEEE 802.11 techniques, IEEE 802.15 techniques, IEEE 802.16 techniques, home eNB assisted communications, and/or the like.

The apparatus 10 may comprise memory, such as for example, a subscriber identity module (SIM) 38, a removable user identity module (R-UIM), an eUICC 99, UICC, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing functions of the user equipment/mobile terminal. The memories may comprise an identifier, such as for example, an international mobile equipment identification (IMEI) code, capable of uniquely identifying apparatus 10 (or a manufacturer may issue a certificate, a media access control address, and/or other kind of device identity). The functions may include one or more of the operations disclosed herein with respect to the user equipment and devices, such as for example, the functions disclosed at process 200 and/or the like). The memories may comprise an identifier, such as for example, an international mobile equipment identification (IMEI) code, capable of uniquely identifying apparatus 10. In the example embodiment, the processor 20 may be configured using computer code stored at memory 40 and/or 42 to receive an update to an application stored in a secure memory device, securely send notifications/tickets to other devices to announce the availability of updates at the secure memory device of a user equipment, securely provide the update to the other devices connected to the user equipment via a group or home network, and/or the like as disclosed herein.

Some of the embodiments disclosed herein may be implemented in software, hardware, application logic, or a combination of software, hardware, and application logic. The software, application logic, and/or hardware may reside on memory 40, the control apparatus 20, or electronic components, for example. In some example embodiment, the application logic, software or an instruction set is maintained on any one of various conventional computer-readable media. In the context of this document, a "computer-readable medium" may be any non-transitory media that can contain, store, communicate, propagate or transport the instructions for use by or in connection with an instruction execution system, apparatus, or device, such as for example, a computer or data processor circuitry, with examples depicted at least at FIG. 6. A computer-readable medium may comprise a non-transitory computer-readable storage medium that may be any media that can contain or store the instructions for use by or in connection with an instruction execution system, apparatus, or device, such as for example, a computer. Moreover, some of the embodiments disclosed herein include computer programs configured to cause methods as disclosed herein (see, for example, process 200 and/or the like).

Without in any way limiting the scope, interpretation, or application of the claims appearing below, a technical effect of one or more of the example embodiments disclosed herein is providing secure synchronization of data among applications in a home network.

## Claims

1. A method comprising:
receiving, at a user equipment (112), an update to an application stored in a secure memory device at the user equipment (112);
sending, when at least one device connects to a group network including the at least one device (114) and the user equipment (112), a notification to announce the update being available at the secure memory device at the user equipment (112), wherein the notification is sent securely to the at least one device (114);
receiving, at the user equipment, the notification from the at least one device; and
providing, by the user equipment (112), the update securely to the at least one device (114) from which the notification has been received, when the at least one device (114) connects to the group network.

2. The method of claim 1, wherein the notification is bound to the at least one device (114).

3. The method of claim 2, wherein the notification includes at least one of an identifier of the at least one device (114) and a value to bind the notification to the at least one device (114).

4. A method as in any of claims 1-3, wherein the notification includes an identify of the user equipment (112), an application identifier, and a version identifier for the application.

5. A method as in any of claims 1-4, wherein the notification is sent securely by the secure memory device by at least one of authenticating the at least one device (114) and encrypting the notification.

6. A method as in any of claims 1-5, wherein the update is provided securely by the secure memory device by at least one of authenticating the at least one device (114) and encrypting the notification.

7. A method as in any of claims 5-6, wherein the at least one other device includes another secure memory device to perform the authenticating and the encrypting with the secure memory device at the user equipment (112).

8. A method as in any of claims 1-7, wherein the secure memory device at the user equipment (112) includes at least one of a secure element, a universal integrated circuit card, an enhanced universal integrated circuit card, an embedded universal integrated circuit card, a smartcard, a secure memory card, a trusted execution environment, and a subscriber identity module.

9. A non-transitory computer-readable storage medium including computer code, which when executed by an apparatus causes said apparatus to perform a method according to at least one of claims 1 to 8.

10. An apparatus comprising means for performing:
receiving an update to an application stored in a secure memory device at the apparatus;
sending, when at least one device (114) connects to a group network including the at least one device (114) and the apparatus, a notification to announce the update being available at the secure memory device at the apparatus, wherein the notification is sent securely to the at least one device (114);
receiving the notification from the at least one device; and
providing the update securely to the at least one device (114) from which the notification has been received, when the at least one device (114) connects to the group network.

11. An apparatus as in claim 10,
wherein the notification includes a ticket bound to an identity of the at least one device (114), the ticket authorizing the at least one device (114) to receive the update.

12. An apparatus as in claim 11 comprising means for providing the update securely to the at least one device (114) when the at least one device (114) redeems its ticket.

13. An apparatus as in claim 10, 11 or 12 comprising means for tracking whether updates have been sent to certain devices.

14. An apparatus as claimed in any of claims 10 to 13 wherein the apparatus comprises a user equipment (112).

15. A computer program comprising instructions for causing an apparatus to perform at least the following:
receiving, at a user equipment (112), an update to an application stored in a secure memory device at the user equipment (112);
sending, when at least one device connects to a group network including the at least one device (114) and the user equipment (112), a notification to announce the update being available at the secure memory device at the user equipment (112), wherein the notification is sent securely to the at least one device (114);
receiving, at the user equipment, the notification from the at least one device; and
providing, by the user equipment (112), the update securely to the at least one device (114) from which the notification has been received, when the at least one device (114) connects to the group network.

## Patentansprüche

1. Verfahren, das Folgendes umfasst:
Empfangen einer Aktualisierung einer Anwendung, die in einer sicheren Speichervorrichtung einer Teilnehmereinrichtung (112) gespeichert ist, an der Teilnehmereinrichtung (112);
Senden einer Benachrichtigung, um anzukündigen, dass die Aktualisierung an der sicheren Speichervorrichtung an der Teilnehmereinrichtung (112) verfügbar ist, wenn sich mindestens eine Vorrichtung mit einem Gruppennetzwerk verbindet, das die mindestens eine Vorrichtung (114) und die Teilnehmereinrichtung (112) beinhaltet, wobei die Benachrichtigung sicher an die mindestens eine Vorrichtung (114) gesendet wird;
Empfangen der Benachrichtigung an der Teilnehmereinrichtung von der mindestens einen Vorrichtung; und
sicheres Bereitstellen der Aktualisierung durch die Teilnehmereinrichtung (112) für die mindestens eine Vorrichtung (114), von der die Benachrichtigung empfangen wurde, wenn sich die mindestens eine Vorrichtung (114) mit dem Gruppennetzwerk verbindet.

2. Verfahren nach Anspruch 1, wobei die Benachrichtigung an die mindestens eine Vorrichtung (114) gebunden ist.

3. Verfahren nach Anspruch 2, wobei die Benachrichtigung mindestens eines von einer Kennung der mindestens einen Vorrichtung (114) und einem Wert beinhaltet, um die Benachrichtigung an die mindestens eine Vorrichtung (114) zu binden.

4. Verfahren nach einem der Ansprüche 1-3, wobei die Benachrichtigung eine Kennung der Teilnehmereinrichtung (112), eine Anwendungskennung und eine Versionskennung für die Anwendung beinhaltet.

5. Verfahren nach einem der Ansprüche 1-4, wobei die Benachrichtigung von der sicheren Speichervorrichtung durch mindestens eines vom Authentifizieren der mindestens einen Vorrichtung (114) und vom Verschlüsseln der Benachrichtigung gesendet wird.

6. Verfahren nach einem der Ansprüche 1-5, wobei die Aktualisierung von der sicheren Speichervorrichtung durch mindestens eines vom Authentifizieren der mindestens einen Vorrichtung (114) und vom Verschlüsseln der Benachrichtigung bereitgestellt wird.

7. Verfahren nach einem der Ansprüche 5-6, wobei die mindestens eine andere Vorrichtung zum Durchführen des Authentifizierens und des Verschlüsselns mit der sicheren Speichervorrichtung an der Teilnehmereinrichtung (112) eine weitere sichere Speichervorrichtung beinhaltet.

8. Verfahren nach einem der Ansprüche 1-7, wobei die sichere Speichervorrichtung an der Teilnehmereinrichtung (112) mindestens eines von einem sicheren Element, einer universellen integrierten Schaltungskarte, einer erweiterten universellen integrierten Schaltungskarte, einer eingebetteten universellen integrierten Schaltungskarte, einer Smartcard, einer sicheren Speicherkarte, einer vertrauenswürdigen Ausführungsumgebung und eines Teilnehmeridentitätsmoduls beinhaltet.

9. Nichttransitorisches computerlesbares Speichermedium, das Computercode beinhaltet, der, wenn er von einer Einrichtung ausgeführt wird, die Einrichtung veranlasst, ein Verfahren gemäß mindestens einem der Ansprüche 1 bis 8 durchzuführen.

10. Einrichtung, die Mittel zum Durchführen von Folgendem umfasst:
Empfangen einer Aktualisierung einer Anwendung, die in einer sicheren Speichervorrichtung an der Einrichtung gespeichert ist;
Senden einer Benachrichtigung, um anzukündigen, dass die Aktualisierung an der sicheren Speichervorrichtung an der Einrichtung verfügbar ist, wenn sich mindestens eine Vorrichtung (114) mit einem Gruppennetzwerk verbindet, das die mindestens eine Vorrichtung (114) und die Einrichtung beinhaltet, wobei die Benachrichtigung sicher an die mindestens eine Vorrichtung (114) gesendet wird;
Empfangen der Benachrichtigung von der mindestens einen Vorrichtung; und
sicheres Bereitstellen der Aktualisierung für die mindestens eine Vorrichtung (114), von der die Benachrichtigung empfangen wurde, wenn sich die mindestens eine Vorrichtung (114) mit dem Gruppennetzwerk verbindet.

11. Einrichtung nach Anspruch 10,
wobei die Benachrichtigung ein Ticket beinhaltet, das an eine Identität der mindestens einen Vorrichtung (114) gebunden ist, wobei das Ticket die mindestens eine Vorrichtung (114) zum Empfangen der Aktualisierung autorisiert.

12. Einrichtung nach Anspruch 11, die Mittel zum sicheren Bereitstellen der Aktualisierung für die mindestens eine Vorrichtung (114) umfasst, wenn die mindestens eine Vorrichtung (114) das Ticket einlöst.

13. Einrichtung nach Anspruch 10, 11 oder 12, die Mittel zum Verfolgen, ob Aktualisierungen an bestimmte Vorrichtungen gesendet wurden, umfasst.

14. Einrichtung wie in einem der Ansprüche 10 bis 13 beansprucht, wobei die Einrichtung eine Teilnehmereinrichtung (112) umfasst.

15. Computerprogramm, das Anweisungen zum Veranlassen einer Einrichtung, mindestens Folgendes durchzuführen, umfasst:
Empfangen einer Aktualisierung einer Anwendung, die in einer sicheren Speichervorrichtung einer Teilnehmereinrichtung (112) gespeichert ist, an der Teilnehmereinrichtung (112);
Senden einer Benachrichtigung, um anzukündigen, dass die Aktualisierung an der sicheren Speichervorrichtung an der Teilnehmereinrichtung (112) verfügbar ist, wenn sich mindestens eine Vorrichtung mit einem Gruppennetzwerk verbindet, das die mindestens eine Vorrichtung (114) und die Teilnehmereinrichtung (112) beinhaltet, wobei die Benachrichtigung sicher an die mindestens eine Vorrichtung (114) gesendet wird;
Empfangen der Benachrichtigung an der Teilnehmereinrichtung von der mindestens einen Vorrichtung; und
sicheres Bereitstellen der Aktualisierung durch die Teilnehmereinrichtung (112) für die mindestens eine Vorrichtung (114), von der die Benachrichtigung empfangen wurde, wenn sich die mindestens eine Vorrichtung (114) mit dem Gruppennetzwerk verbindet.

## Revendications

1. Procédé comprenant les étapes consistant à :
recevoir, au niveau d'un équipement utilisateur (112), une mise à jour d'une application stockée dans un dispositif de mémoire sécurisé au niveau de l'équipement utilisateur (112) ;
envoyer, lorsqu'au moins un dispositif se connecte à un réseau de groupe comportant l'au moins un dispositif (114) et l'équipement utilisateur (112), une notification pour annoncer que la mise à jour est disponible sur le dispositif de mémoire sécurisé au niveau de l'équipement utilisateur (112), dans lequel la notification est envoyée de manière sécurisée à l'au moins un dispositif (114) ;
recevoir, au niveau de l'équipement utilisateur, la notification à partir de l'au moins un dispositif ; et
fournir, par l'équipement utilisateur (112), la mise à jour de manière sécurisée à l'au moins un dispositif (114) à partir duquel la notification a été reçue, lorsque l'au moins un dispositif (114) se connecte au réseau de groupe.

2. Procédé de la revendication 1, dans lequel la notification est liée à l'au moins un dispositif (114).

3. Procédé de la revendication 2, dans lequel la notification comporte au moins un parmi un identifiant de l'au moins un dispositif (114) et une valeur pour lier la notification à l'au moins un dispositif (114).

4. Procédé selon l'une quelconque des revendications 1 à 3, dans lequel la notification comporte un identifiant de l'équipement utilisateur (112), un identifiant d'application, et un identifiant de version pour l'application.

5. Procédé selon l'une quelconque des revendications 1 à 4, dans lequel la notification est envoyée de manière sécurisée par le dispositif de mémoire sécurisé, par au moins un parmi l'authentification de l'au moins un dispositif (114) et le cryptage de la notification.

6. Procédé selon l'une quelconque des revendications 1 à 5, dans lequel la mise à jour est prévue de manière sécurisée par le dispositif de mémoire sécurisé par au moins un parmi l'authentification de l'au moins un dispositif (114) et le cryptage de la notification.

7. Procédé selon l'une quelconque des revendications 5 et 6, dans lequel l'au moins un autre dispositif comporte un autre dispositif de mémoire sécurisé pour réaliser l'authentification et le cryptage avec le dispositif de mémoire sécurisé au niveau de l'équipement utilisateur (112).

8. Procédé selon l'une quelconque des revendications 1 à 7, dans lequel le dispositif de mémoire sécurisé au niveau de l'équipement utilisateur (112) comporte au moins un parmi un élément sécurisé, une carte à circuit intégré universelle, une carte à circuit intégré universelle améliorée, une carte à circuit intégré universelle intégrée, une carte à puce, une carte à mémoire sécurisée, un environnement d'exécution de confiance, et un module d'identité d'abonné.

9. Support de stockage non transitoire lisible par ordinateur comportant un code informatique, qui, lorsqu'il est exécuté par un appareil, amène ledit appareil à réaliser un procédé selon au moins l'une des revendications 1 à 8.

10. Appareil comprenant des moyens pour réaliser les étapes consistant à :
recevoir une mise à jour d'une application stockée dans un dispositif de mémoire sécurisé au niveau de l'appareil ;
envoyer, lorsqu'au moins un dispositif (114) se connecte à un réseau de groupe comportant l'au moins un dispositif (114) et l'appareil, une notification pour annoncer que la mise à jour est disponible sur le dispositif de mémoire sécurisé au niveau de l'appareil, dans lequel la notification est envoyée de manière sécurisée à l'au moins un dispositif (114) ;
recevoir la notification à partir de l'au moins un dispositif ; et
fournir la mise à jour de manière sécurisée à l'au moins un dispositif (114) à partir duquel la notification a été reçue, lorsque l'au moins un dispositif (114) se connecte au réseau de groupe.

11. Appareil selon la revendication 10, dans lequel la notification comporte un ticket lié à une identité de l'au moins un dispositif (114), le ticket autorisant l'au moins un dispositif (114) à recevoir la mise à jour.

12. Appareil selon la revendication 11, comprenant des moyens pour fournir la mise à jour de manière sécurisée à l'au moins un dispositif (114) lorsque l'au moins un dispositif (114) active son ticket.

13. Appareil selon la revendication 10, 11 ou 12, comprenant des moyens pour suivre l'envoi des mises à jour à certains dispositifs.

14. Appareil selon l'une quelconque des revendications 10 à 13 dans lequel l'appareil comprend un équipement utilisateur (112).

15. Programme informatique comprenant des instructions pour amener un appareil à réaliser au moins les étapes suivantes :
recevoir, au niveau d'un équipement utilisateur (112), une mise à jour d'une application stockée dans un dispositif de mémoire sécurisé au niveau de l'équipement utilisateur (112) ;
envoyer, lorsqu'au moins un dispositif se connecte à un réseau de groupe comportant l'au moins un dispositif (114) et l'équipement utilisateur (112), une notification pour annoncer que la mise à jour est disponible sur le dispositif de mémoire sécurisé au niveau de l'équipement utilisateur (112), dans lequel la notification est envoyée de manière sécurisée à l'au moins un dispositif (114) ;
recevoir, au niveau de l'équipement utilisateur, la notification à partir de l'au moins un dispositif ; et
fournir, par l'équipement utilisateur (112), la mise à jour de manière sécurisée à l'au moins un dispositif (114) à partir duquel la notification a été reçue, lorsque l'au moins un dispositif (114) se connecte au réseau de groupe.
